# EUROPÄISCHE PATENTANMELDUNG

(11) **EP 3 940 158 A1**
(43) Veröffentlichungstag der Anmeldung: **19.01.2022**
(21) Anmeldenummer: 20186244.8
(22) Anmeldetag: 16.07.2020
(51) Int. Cl.: E03C 1/04, F16B 37/08

(54) **SANITÄRARMATUR MIT SCHNELLMONTAGEMUTTER**

(71) Anmelder: Ideal Standard International NV, 1935 Zaventem (BE)
(72) Erfinder: Raj, Ankit, 54518 Dreis (DE); Donell, Ralf, 54497 Morbach (DE)
(74) Vertreter: Feucker, Max Martin

(57) **Zusammenfassung**

Sanitärarmatur mit einer Befestigungsvorrichtung zum Fixieren eines Armaturenkörpers (1) auf einem Waschtisch (2), umfassend: den Armaturenkörper (1), eine durch eine Ausnehmung (3) im Waschtisch (2) führbare Gewindestange (4), ein Gegenhalteelement (5) und eine Mutter (6), wobei das Gegenhalteelement (5) eine Öffnung (7) für die Gewindestange (4) aufweist, so dass das Gegenhalteelement (5) auf die mit dem auf einer Waschtischoberseite (8) anlegbaren Armaturenkörper (1) verbundene Gewindestange (4) von unten aufschiebbar ist, und wobei die Mutter (6) ein Innengewinde (9) und ein Antriebsprofil (10) aufweist, so dass der Armaturenkörper (1) durch Anziehen der Mutter (6) an dem Antriebsprofil (10) gegen das Gegenhalteelement (5) über ein Außengewinde (13) der Gewindestange (4) auf dem Waschtisch (2) fixierbar ist.

## Beschreibung

Die vorliegende Erfindung betrifft eine Sanitärarmatur mit einer Befestigungsvorrichtung zum Fixieren eines Armaturenkörpers auf einem Waschtisch, umfassend:
- den Armaturenkörper,
- eine durch eine Ausnehmung im Waschtisch führbare Gewindestange,
- ein Gegenhalteelement und
- eine Mutter,
wobei das Gegenhalteelement eine Öffnung für die Gewindestange aufweist, so dass das Gegenhalteelement auf die mit dem auf einer Waschtischoberseite anlegbaren Armaturenkörper verbundene Gewindestange von unten aufschiebbar ist und wobei die Mutter ein Innengewinde und ein Antriebsprofil aufweist, so dass der Armaturenkörper durch Anziehen der Mutter an dem Antriebsprofil gegen das Gegenhalteelement über ein Außengewinde der Gewindestange auf dem Waschtisch fixierbar ist.

Üblicherweise wird eine mit einem Armaturenkörper verbundene Gewindestange durch eine Ausnehmung in einem Waschtisch geführt. Anschließend wird der auf einer Waschtischoberseite aufliegende Armaturenkörper mit einem von unten auf die Gewindestange aufschiebbaren Gegenhalteelement sowie mit einer Mutter, die von unten auf die Gewindestange aufgedreht wird, auf dem Waschtisch verspannt. Um auch lange Distanzen zwischen Armaturenkörperunterseite und Waschtischunterseite überbrücken zu können, sind die Gewindestangen häufig sehr lang und ein Aufdrehen der Mutter dauert lange. Auch können Gewindefehler entlang der Gewindestange und nicht bearbeitete Abschnitte der Gewindestange von einer üblichen Mutter nicht oder nur besonders aufwendig überwunden werden. Um eine schnelle und einfache Montage einer solchen Sanitärarmatur zu ermöglichen, existieren im Stand der Technik bereits einige Lösungsvorschläge, welche beispielsweise durch Fixier-Federn, durch Verkippung der Mutter und durch ausweichende Gewindeabschnitte ein Aufschieben der Mutter auf die Gewindestange ohne Drehbewegung ermöglichen.

Eine Sanitärarmatur mit den vorgenannten Merkmalen zur Schnellbefestigung ist beispielsweise aus DE 10 2005 057 729 A1 bekannt. Hierbei wird eine Mutter mit einer Durchgangsbohrung, die wenigstens so groß ist wie ein Außendurchmesser einer Gewindestange, zusammen mit einer in der Mutter angeordneten Schraubenfeder auf die Gewindestange aufgeschoben. Durch einen Ringbund auf einer Innenseite der Mutter wird die Schraubenfeder drehfest gehalten und beim Aufschieben entsprechend geweitet. Während der Befestigung beim Drehen der Mutter gegen ein zuvor aufgeschobenes Gegenhalteelement wird ein verjüngend ausgebildeter Teil der Schraubenfeder in einem konisch erweiterten Endbereich der Mutter von dem Gewinde der Gewindestange hineingezogen und bildet anschließend einen Gewindegang mit der Mutter. Daher ist bei der Montage einer solchen Befestigungsvorrichtung ein Widerstand der Feder beim Überschieben vorhanden und es kann zu einem Verklemmen der Feder im Gewindegang gegen die Mutter kommen. Ein weiterer Nachteil besteht darin, dass keine konstruktive Lösung vorhanden ist, um ein entsprechendes Drehmoment beim Anziehen der Mutter gegen das Gegenhalteelement vorzugeben. Daher kann bei zu starkem Anziehen der Mutter die Schraubenfeder brechen und/oder der Gewindegang der Gewindestange verzogen werden. Ein anschließendes Abdrehen der Mutter von der Gewindestange erweist sich dann als besonders schwierig. Generell ist bei der Demontage der Mutter zu beachten, dass eine erneute Montage aufgrund einer verzogenen Schraubenfeder nicht möglich und/oder mit schlechteren Anzieheigenschaften zu erwarten ist.

Eine weitere Möglichkeit zur schnelleren Montage offenbart DE 10 2010 006 375 A1, bei der die Mutter als eine Kippmutter ausgeführt ist. Diese wird in einer Vormontagestellung ohne Gewindeeingriff auf die armaturenseitige Gewindestange aufgeschoben. Nach einem Anschlag an ein zuvor aufgeschobenes Gegenhalteelemente wird die Mutter durch eine Verschwenkung in eine koaxiale Montagestellung gebracht und kann nun mit Gewindeeingriff gegen den Waschtisch verspannt werden. Dabei muss der Monteur stets aufwendig darauf achten, dass die Kippmutter in der Aufschiebeposition gehalten wird. Auch sind bei solchen Kippmuttervorrichtungen der Kippvorgang und das darauffolgende Eingreifen der Gewinde ineinander ein zusätzlicher Montageschritt.

Eine weitere Alternative, um eine Mutter auf eine Gewindestange ohne Drehbewegung aufschieben zu können, offenbart die DE 44 03 974 A1. Dabei ist ein Muttergewinde mehrfach unterbrochen, wodurch die verbleibenden federnden Abschnitte der Mutter nach außen nachgebend beziehungsweise ausweichend ausgebildet sind. Nach einem ratschenartigen Aufschieben auf die Gewindestange wird die Mutter gegen ein zuvor aufgeschobenes Gegenhalteelement durch kurzes Anziehen verspannt. Auch in einer solchen Befestigungsvorrichtung ist der Widerstand durch das Verhaken der Gewindegänge ineinander vorhanden.

Aufgabe der vorliegenden Erfindung ist es, die mit Bezug zum Stand der Technik geschilderten Nachteile zu beseitigen und insbesondere eine Sanitärarmatur mit einer Befestigungsvorrichtung anzugeben, die schnell und einfach montierbar, sowie demontierbar ist.

Gelöst wird die Aufgabe durch eine Sanitärarmatur mit den Merkmalen des unabhängigen Anspruchs. Vorteilhafte Weiterbildungen der Sanitärarmatur sind in den abhängigen Ansprüchen und in der Beschreibung angegeben, wobei einzelne Merkmale der vorteilhaften Weiterbildungen in technisch sinnvoller Weise miteinander kombinierbar sind.

Gelöst wird die Aufgabe insbesondere durch eine Sanitärarmatur mit den eingangs genannten Merkmalen, wobei die Mutter entlang der Gewindestange linear aufschiebbar ist, wobei die Mutter insbesondere oberhalb des Antriebsprofils wenigstens zwei vorzugsweise parallel zu einer Mittelpunktsachse der Mutter und in Umfangsrichtung versetzt zueinander angeordnete Längsausnehmungen aufweist, so dass die Mutter quer zu der Mittelpunktsachse auslenkbare Mantelabschnitte aufweist, wobei die Mantelabschnitte auf der dem Gegenhalteelement zugewandten Seite und/oder die Öffnung des Gegenhalteelements eine konische Reduzierung aufweisen, so dass die Mantelabschnitte bei dem linearen Aufschieben durch die konische Reduzierung in Richtung der Mittelpunktsachse auslenkbar sind, wodurch die Mutter in eine Greifstellung gelangt, in der das Innengewinde und das Außengewinde ineinandergreifen und aus der die Mutter anziehbar ist.

Bei einer Montage der Sanitärarmatur wird die mit dem Armaturenkörper verbundene Gewindestange durch die Ausnehmung im Waschtisch eingelassen bis der Armaturenkörper auf einer Waschtischoberseite mit einer Armaturenkörperunterseite aufliegt. Anschließend wird das Gegenhalteelement von unten auf die mit dem Armaturenkörper verbundene Gewindestange aufgeschoben, wobei die Gewindestange durch die Öffnung des Gegenhalteelements geführt wird. Die Mutter ist entlang der Gewindestange bewegbar und wird bei der Montage bis zu einem Anschlag der Mutter gegen das Gegenhalteelement auf die Gewindestange geschoben. Abhängig von dem Innengewinde der Mutter kann diese widerstandslos oder ratschenartig auf die Gewindestange aufgeschoben werden. Bei diesem Anschlag von Außenflächen der Mantelabschnitte der Mutter gegen eine Innenfläche der Öffnung des Gegenhalteelements können durch weiteres Aufschieben beziehungsweise leichtes Drücken der Mutter nach oben die federnden Mantelflächen nach innen ausgelenkt werden, bis das Innengewinde der Mutter und das Außengewinde der Gewindestange erstmals greifen. In dieser Greifposition kann insbesondere durch eine kurze Drehung der Mutter eine vorteilhafte Vorfixierung der Mutter bewirkt werden. Durch weiteres Anziehen der Mutter über das Antriebsprofil, welches insbesondere als ein Außensechskant ausgebildet ist und mit einem handelsüblichen Werkzeug anziehbar ist, gegen das an der Waschtischunterseite anliegende Gegenhalteelement wird eine Fixierung des Armaturenkörpers auf dem Waschtisch über die Gewindestange bewirkt.

Besitzt die Mutter eine Übergröße gegenüber der Gewindestange kann insbesondere bei gradem Aufschieben ein widerstandsfreies Bewegen entlang der Gewindestange vollzogen werden. Insbesondere greifen beim Aufschieben das Innengewinde der Mutter und das Außengewinde der Gewindestange nicht im Sinne eines normalen Gewindeengriffs. Dabei kann durch ein Anwinkeln ein gewünschtes Anlegen der Mutter an die Gewindestange mit einem inneren Bereich, welcher kein Innengewinde aufweist, zusätzlich das Aufschieben der Mutter vereinfachen, wobei der innere Bereich entlang der Gewindestange geführt wird und ein Verkanten der Gewindegänge verhindert wird. Weiterhin ist denkbar, dass das Außengewinde der Gewindestange und das Innengewinde der Mutter in axialer Richtung fluchten. Die Mutter ist dann ratschenartig auf die Gewindestange aufschiebbar.

Die Mutter weist wenigstens zwei, bevorzugt drei oder mehr, in Umfangsrichtung gleichmäßig angeordnete und nach oben offene Längsausnehmungen auf. Dabei beginnen die Längsausnehmungen insbesondere oberhalb des Antriebsprofils. Dadurch kann die Mutter eine gleiche Anzahl von ebenfalls gleichmäßig angeordneten Mantelabschnitten aufweisen. Diese Mantelabschnitte sind quer zur Gewindestange auslenkbar und damit federnd ausgebildet. Somit können insbesondere die federnden Mantelabschnitte, welche auf ihrer Innenseite das Innengewinde der Mutter aufweisen, gegen das Außengewinde der Gewindestange gedrückt werden und trotz der Aufschiebbarkeit der Mutter einen Gewindeeingriff ermöglichen.

In einer Ausführungsform sind die Längsausnehmungen in ihrer Länge (in axialer Richtung von oben bis zum Ende der Längsausnehmung) und Breite (in Umfangsrichtung) gleich ausgebildet. Dies bedeutet, dass auch die Mantelabschnitte gleich ausgebildet sind. Durch die axiale Länge und die Breite in Umfangsrichtung der Längsausnehmungen kann somit vorteilhaft ein gleichmäßiges Auslenkverhalten der Mantelabschnitte eingestellt werden.

Alternativ kann jedoch auch vorgesehen sein, dass die Breite entlang der axialen Richtung in Umfangsrichtung der Längsausnehmungen variiert. Bevorzugt wäre bei einer variierenden Breite beispielsweise eine steigende oder eine abnehmende Breite in axialer Richtung. Dadurch kann vorteilhaft das Auslenkverhalten der Mantelabschnitte eingestellt werden. Insbesondere kann dabei auch eine Anlegeflächenverteilung der Mantelabschnitte vorteilhaft festgelegt werden. Bei der Anlegefläche handelt es sich um die Fläche, auf welcher es zum Gewindeeingriff kommt.

Weitere Einflussfaktoren auf das Auslenkverhalten der Mantelabschnitte haben die Materialauswahl, die Wandstärke der Mutter sowie die Anordnung der Längsausnehmungen selbst. Auf diese Art und Weise können vorteilhaft die Stabilität und eine bevorzugte maximale Auslenkbarkeit der Mantelabschnitte eingestellt werden.

In einer Ausführungsform beginnen die Längsausnehmungen direkt oberhalb des in Umfangsrichtung ununterbrochen beziehungsweise durchgehenden Antriebsprofils. Es ist jedoch auch denkbar, dass die Längsausnehmungen und somit auch die federnden Mantelabschnitte in einem Bereich oberhalb des Antriebsprofils beginnen. Insbesondere durch die Länge und den Beginn der Längsausnehmungen wird das Auslenkverhalten der Mantelabschnitte vorteilhaft einstellbar.

In einer weiteren Ausführungsform weist die Mutter in einem oberen Bereich der Mantelabschnitte eine konische Reduzierung auf. Nach einem ersten Berühren beziehungsweise einem Anschlag der Mutter gegen das Gegenhalteelement wird durch weiteres Aufschieben insbesondere mittels einer Form und einer Anordnung der konischen Reduzierung ein Auslenkbeweg der Mantelabschnitte nach innen in Richtung der Gewindestange vorgegeben. Insbesondere kann durch die Form der konischen Reduzierung der Grad der Auslenkung beim weiteren Aufschieben eingestellt werden.

Es kann auch sein, dass die Öffnung des Gegenhalteelements eine konische Reduzierung nach innen aufweist, wobei die Auslenkung der federnden Mantelabschnitte von der Form und Anordnung der konischen Reduzierung in der Öffnung des Gegenhalteelements vorgegeben wird.

Es ist jedoch auch denkbar, dass die Mutter und das Gegenhalteelement jeweils im Bereich der Mantelabschnitte und im Bereich der Öffnung eine konische Reduzierung aufweisen.

In einer bevorzugten Ausführungsform weist das Gegenhalteelement im Bereich der Öffnung eine konische Reduzierung auf, welche zu einer weiteren konischen Reduzierung der Mutter im Bereich der Mantelabschnitte komplementär ausgebildet ist. Dadurch wird die Führung in Richtung der Gewindestange der Mantelabschnitte vereinfacht. Insbesondere ist die konische Reduzierung der Mutter und die konische Reduzierung der Öffnung des Gegenhalteelements aufeinander abgestimmt, so dass es zu einem Anlegen der Mantelabschnitte an die Gewindestange kommt. Somit kommt es zu einem Greifen der Gewindegänge. Insbesondere befinden sich in der Greifstellung mehr als ein Gewindegang im Eingriff. Bevorzugt befinden sich mindestens zwei oder mehr Gewindeabschnitte des Innengewindes und des Außengewindes im Eingriff miteinander.

In einer anderen Ausführungsform ist die konische Reduzierung entlang der axialen Richtung linienförmig ausgebildet, wodurch beim weiteren Aufschieben ein gleichmäßiges Auslenken der Mantelabschnitte in Richtung der Gewindestange erreicht wird. Es ist jedoch auch denkbar, dass die konische Reduzierung entlang der axialen Richtung als Kurve ausgebildet ist. Bevorzugt ist die Kurve eine Parabel. Durch einen kurvenförmigen Verlauf der konischen Reduzierung kommt es beim weiteren Aufschieben insbesondere zu einem vorteilhaft schnellen und anschließend langsamer werdenden Anstieg der Auslenkung der Mantelabschnitte an die Gewindestange.

In einer Ausführungsform weist die Mutter einen radial vorstehenden Anlegevorsprung auf der Außenseite der Mantelabschnitte auf. Besonders bevorzugt ist der Anlegevorsprung so angeordnet, dass an einem oberen axialen Ende des Anlegevorsprungs unmittelbar die konische Reduzierung der Mantelabschnitte beginnt. Bevorzugt ist an jedem Mantelabschnitt ein Teilabschnitt des Anlegevorsprungs ausgebildet. Besonders bevorzugt sind die Teilabschnitte in ihrer Gestalt gleich ausgebildet und auf der gleichen axialen Höhe angeordnet. Durch den Anlegevorsprung kann vorteilhaft eine Endmontageposition vorgegeben sein.

Zusätzlich kann der Anlegevorsprung an der zur Waschtischunterseite zugewandten Seite eine ebene Fläche aufweisen, die in der Endmontageposition an der Unterseite des Gegenhalteelements anliegt. Dabei bietet der Anlegevorsprung der Befestigungsvorrichtung erhöhte Stabilität durch eine größere Auflagefläche für das Gegenhalteelement. Ohne den Anlegevorsprung liegt das Gegenhalteelement nach dem Aufschieben nur mit den Mantelabschnitten, insbesondere nur in dem Bereich in der die konischen Reduzierung oder die konischen Reduzierungen ausgebildet sind, in der Öffnung des Gegenhalteelements an.

In einer anderen Ausführungsform ist der Anlegevorsprung nach außen rund ausgebildet. Es ist jedoch auch denkbar, dass der Anlegevorsprung andere Außenkonturen aufweist und beispielsweise mit dem Antriebsprofil in axialer Richtung fluchtet. Möglich ist auch, dass der Anlegevorsprung durch das Antriebsprofil gebildet wird. In diesem Fall ist der Beginn der Längsausnehmungen insbesondere auch unterhalb des Antriebsprofils ausgebildet und das weiter oben an der Mutter angeordnete Antriebsprofil ist insbesondere so ausgebildet, dass es vorzugsweise die Funktionen des Anlegevorsprunges erfüllen kann. Insbesondere eine weitere Anlagefläche passend zum Gegenhalteelement wird dann durch das Antriebsprofil gebildet.

Durch die Form und die Anordnung des Anlegevorsprungs kann insbesondere zusammen mit der konischen Reduzierung besonders vorteilhaft die Auslenkung der Mantelabschnitte in Richtung der Gewindestange vorgegeben sein, in der mehrere Gewindeabschnitte ineinandergreifen und ein weiteres Anziehen durch ein Anlegen des Anlegevorsprungs an das Gegenhalteelement verhindert wird.

Es kann vorgesehen sein, dass zwischen der Mutter, dem Gegenhalteelement, dem Armaturenkörper und/oder der Gewindestange ein oder mehrere Dichtungsringe und/oder ein oder mehrere Unterlegscheiben verspannt werden. Dadurch kann eine höhere Dichtung gegenüber eventuell am Waschtisch ein- oder austretenden Flüssigkeiten bewirkt werden. Unterlegscheiben können dabei insbesondere im Bereich der Öffnung des Gegenhalteelements auch so ausgebildet sein, dass die Mutter und/oder die Mantelabschnitte geführt werden. Auch eine solche Unterlegscheibe zwischen dem Gegenhalteelement und der Mutter kann einen Teil der konischen Reduzierung aufweisen.

Bevorzugt weist das Gegenhalteelement in Umfangsrichtung keine geschlossene Form auf. Besonders bevorzugt ist das Gegenhalteelement nierenförmig ausgebildet. Dies hat den Vorteil, dass von dem Armaturenkörper durch die Ausnehmung reichende wasserführende Schläuche ebenfalls durch das Gegenhalteelement geführt werden. Insbesondere ist die Öffnung für die Gewindestange auf dem Gegenhalteelement so angeordnet, dass die äußeren Bereiche des Gegenhalteelements einen großen Bereich der Waschtischunterseite stützen. Dabei kann das Gegenhalteelement zusätzliche Löcher für wasserführenden Schläuche oder Rohre aufweisen.

In einer Ausführungsform ist das Gegenhalteelement einteilig ausgebildet. Dabei weist es insbesondere in der Öffnung für die Gewindestange eine konische Reduzierung auf.

Es ist jedoch auch denkbar, dass das Gegenhalteelement aus zwei oder mehr Teilen gebildet wird. Dabei kann es insbesondere in diesem Fall sein, dass die konische Reduzierung in der Öffnung nur in einem oder in mehreren unten angeordneten Teilen des Gegenhalteelements ausgebildet ist.

In einer anderen Ausführungsform der Erfindung ist vorgesehen, dass ein Kerndurchmesser des Innengewindes der Mutter größer ist als ein Nenndurchmesser des Außengewindes der Gewindestage. In diesem Fall besitzt die Mutter gegenüber der Gewindestange eine Übergröße. Dadurch dass insbesondere der Kerndurchmesser des Innengewindes der Mutter größer ist als der Nenndurchmesser des Außengewindes der Gewindestange, kann die Mutter auch in unbearbeiteten Bereichen der Gewindestange über die Gewindestange bewegt werden. Auch möglicherweise vorhandene Gewindefehler die zu einem Verkanten der Mutter auf der Gewindestange führen würden, können so berührungslos überwunden werden. Insbesondere ist somit eine leichte und schnelle Befestigung der Sanitärarmatur bei der Montage möglich.

In einer anderen Ausführungsform der Erfindung ist vorgesehen, dass ein Kerndurchmesser des Innengewindes der Mutter gleich groß oder kleiner ist als ein Nenndurchmesser des Außengewindes der Gewindestange. In diesem Fall ist die Mutter ratschenartig auf die Gewindestange aufschiebbar. Die Gewindeflanken des Innengewindes der Mutter und des Außengewindes der Gewindestange fluchten dabei in axialer Richtung beziehungsweise überlappen. Die Mutter ist folglich mit einem gewissen Widerstand auf die Gewindestange aufschiebbar. Insbesondere ist denkbar, dass zum Aufschieben der Mutter auf die Gewindestange ein Werkzeug verwendet wird, welches das ratschenartige Aufschieben erleichtert. Bei dem Aufschieben können vorteilhaft die Mantelabschnitte der Mutter durch das Zusammenwirken der Gewinde nach außen ausgelenkt werden, so dass sich ein Aufschieben zusätzlich vereinfacht. Auf diese Weise kann die Mutter vorteilhaft bis zu einer gewünschten Position an der Gewindestange aufgeschoben werden und in dieser Position gehalten werden. Die Mutter kann somit bei der Montage nach einem ersten initialen Aufschieben vorteilhaft verliersicher auf der Gewindestange gehalten werden. Zusätzlich kann bei der Demontage vorteilhaft die Mutter nach einem Lösen nicht unkontrolliert von der Gewindestange rutschen.

In einer anderen Ausführungsform der Erfindung ist vorgesehen, dass die Mutter wenigstens drei, bevorzugt vier oder mehr, in Umfangsrichtung versetzt zueinander angeordnete Längsausnehmungen aufweist. Folglich weist die Mutter drei oder mehr auslenkbare Mantelabschnitte auf, welche vorteilhaft leicht auslenkbar sind und ein geleichmäßigeres Anlegen der Mantelabschnitte an die Gewindestange ermöglichen.

Die Montage einer Sanitärarmatur zur Fixierung auf einem Waschtisch mit der zuvor beschriebenen Befestigungsvorrichtung beinhaltet vorzugsweise zumindest einige der folgenden Schritte, insbesondere in der folgenden Reihenfolge:
- Einführung des mit der Gewindestange verbundenen Armaturenkörpers in die Ausnehmung des Waschtischs bis es zu einem Aufliegen des Armaturenkörpers auf der Waschtischoberseite kommt.
- Aufschieben des Gegenhalteelements in der Öffnung auf die Gewindestange bis es zu einem Anliegen an der Waschtischunterseite des Gegenhalteelements kommt.
- Aufschieben der Mutter bis es zu einem Anschlag beziehungsweise zu einem ersten Berühren der Mantelabschnitte der Mutter und der Öffnung des Gegenhalteelements kommt.
- Weiteres Aufschieben oder leichtes Drücken bis es zu einer Greifstellung kommt, in welcher die Mantelabschnitte beziehungsweise das Innengewinde der Mutter ein erstes Mal mit der Gewindestange beziehungsweise dem Außengewinde vollständig in Berührung beziehungsweise in Eingriff kommen. Vorteilhaft kann, in der Greifstellung eine kurze Drehung in Umfangsrichtung gemäß dem Gewindegang der Mutter durchgeführt werden, um eine Vorfixierung der Mutter auf der Gewindestange zu bewirken.
- Anziehen der Mutter auf der Gewindestange über das Antriebsprofil insbesondere bis es zu einem Anliegen des Anlegevorsprungs an das Gegenhalteelement kommt und der Armaturenkörper auf dem Waschtisch fixiert ist.

Ein gemäß der Erfindung beispielhafter Demontageprozess der Befestigungsvorrichtung erfolgt in umgekehrter Reihenfolge des Montageprozesses, wobei das Anziehen der Mutter durch ein Lösen der Mutter ersetzt wird, und das Aufschieben durch ein Abziehen ersetzt wird, und ein Einlassen durch ein Herausnehmen ersetzt wird.

Die Erfindung sowie das technische Umfeld werden im Folgenden anhand der Figuren beispielshaft erläutert. Es zeigen schematisch:
- Figur 1:: eine Schnittansicht einer Befestigungsvorrichtung in einer Greifstellung,
- Figur 2:: eine Perspektivansicht einer Gewindestange mit zum Teil aufgeschobenem Gegenhalteelement und einer nicht aufgeschobenen Mutter,

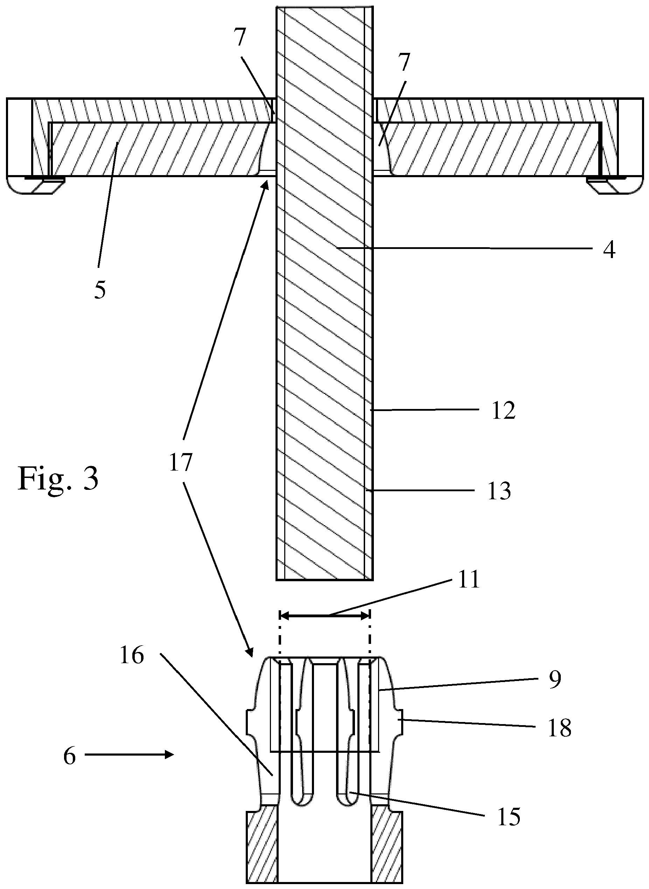

- Figur 3:: eine Schnittansicht durch die Gewindestange gemäß Figur 2,
- Figur 4:: eine Perspektivansicht der Gewindestange mit zum Teil aufgeschobenem Gegenhalteelement und eine Mutter in einer Endmontageposition und
- Figur 5:: eine Schnittansicht in der Endmontageposition gemäß Figur 4.

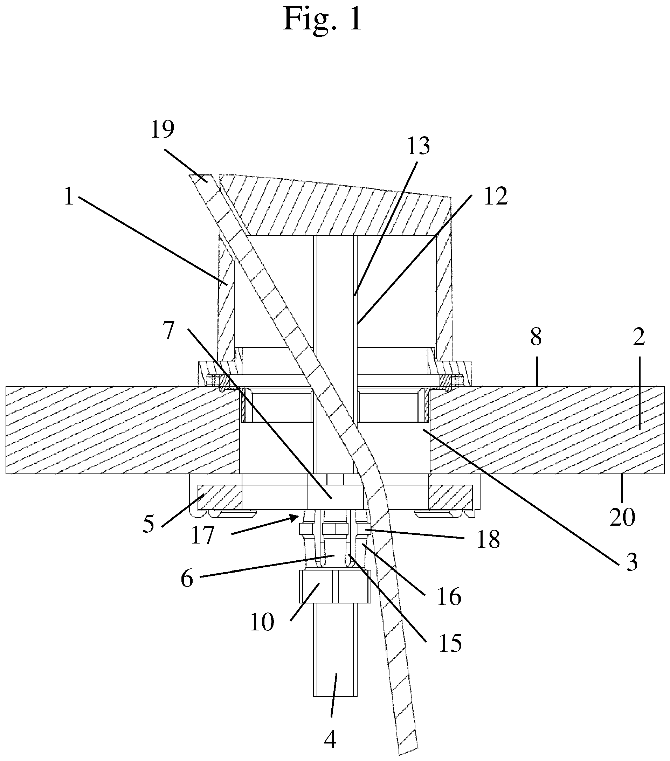

Die in den Figuren dargestellte Sanitärarmatur umfasst einen Armaturenkörper 1, der mit einer durch eine Ausnehmung 3 im Waschtisch 2 führbaren Gewindestange 4 verbunden ist. Weiterhin ist der Armaturenkörper 1 mit einem von unten auf die Gewindestange 4 aufschiebbaren Gegenhalteelement 5 und einer auf die Gewindestange 4 aufschiebbaren Mutter 6 auf dem Waschtisch 2 fixierbar. Der Waschtisch 2 weist dabei eine Waschtischoberseite 8 und eine Waschtischunterseite 20 auf. Zusätzlich ist in Figur 1 eine Zugstange 19 für einen Abfluss erkennbar. Die Gewindestange 4 ist dabei mit dem Armaturenkörper 2 verbunden und weist ein Außengewinde 13 mit einem Nenndurchmesser 12 auf.

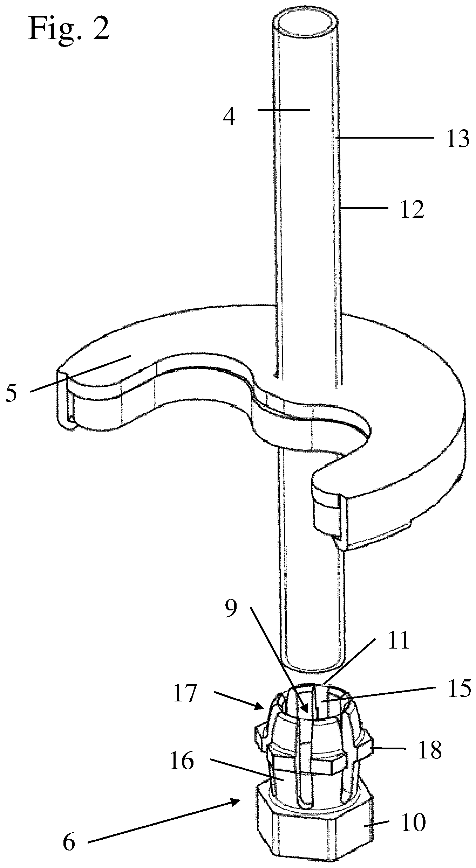

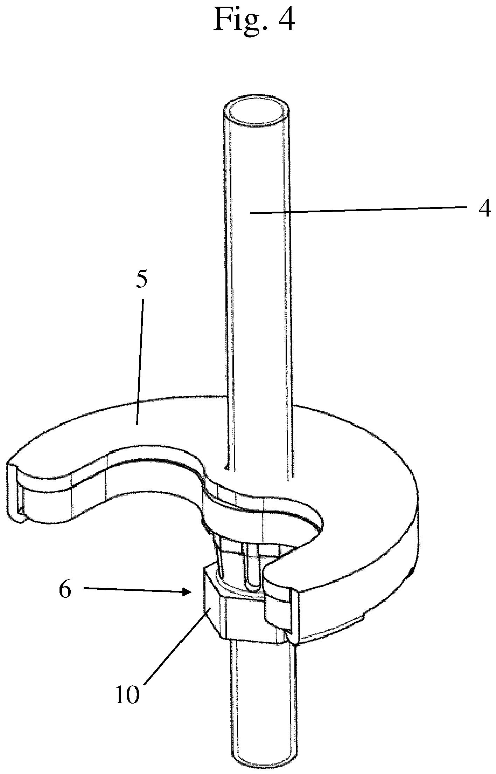

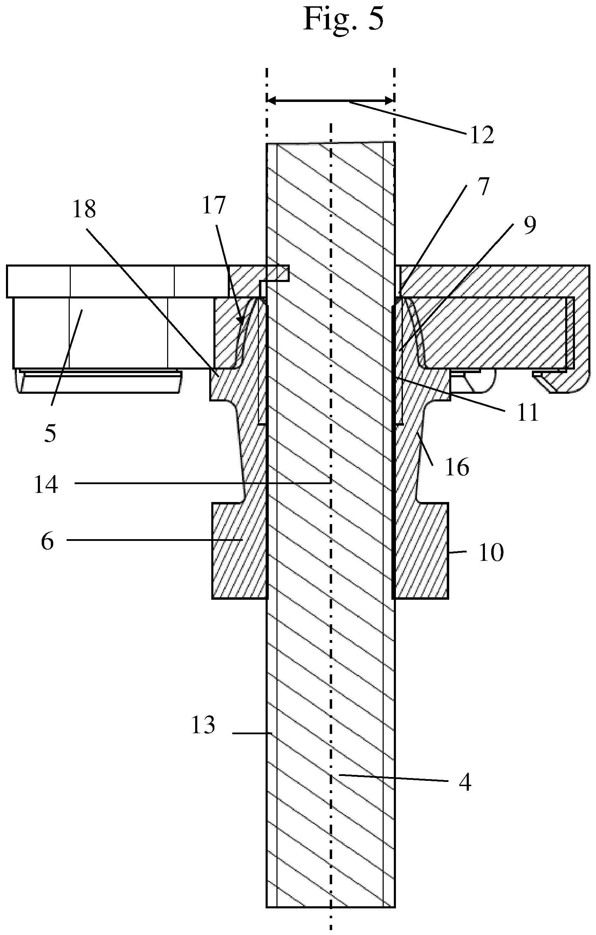

Das Gegenhalteelement 5 ist in den Figuren nierenförmig ausgebildet (vergleiche Figur 2 und 4) und weist eine Öffnung 7 auf. Die Öffnung 7 ist für die Gewindestange 4 vorgesehen, wobei die Öffnung 7 kreisförmig und größer ist als der Nenndurchmesser 12 des Außengewindes 13 der Gewindestange 4. Das Gegenhalteelement 5 ist in den Figuren mehrteilig ausgebildet und weist wie insbesondere in Figur 5 zu sehen, in einem unteren Teil des Gegenhalteelements 5 eine konische Reduzierung 17 im Bereich der Öffnung 7 auf.

Die beispielsweise in Figur 2 im Detail dargestellte Mutter 6 weist ein Antriebsprofil 10 sowie ein Innengewinde 9 mit einem Kerndurchmesser 11 auf. Außerdem weist die Mutter 6 oberhalb des Antriebsprofils 10 sechs gleich große und im Bezug zu einer Mittelpunktsachse 14 gleich angeordnete Längsausnehmungen 15 auf. Zudem sind die übrigen Bereiche der Mutter 6 neben den Längsausnehmungen 15 als federnde Mantelabschnitte 16 ausgebildet, welche oberhalb eines Anlegevorsprungs 18 ebenfalls eine konische Reduzierung 17 aufweisen, die komplementär zu der konischen Reduzierung 17 der Öffnung 7 des Gegenhalteelements 5 ausgebildet ist. Dabei weist die Mutter 6 gegenüber der Gewindestange 4 eine Übergröße auf und das Innengewinde 9 der Mutter 6, wie insbesondere in Figur 5 zu erkennen ist, ist nur in einem Bereich der Mantelabschnitte 16 ausgebildet.

Bei einer Montage der in den Figuren dargestellten Sanitärarmatur wird zunächst der Armaturenkörper 1 auf den Waschtisch 2 auf der Waschtischoberseite 8 aufgelegt, wobei die mit dem Armaturenkörper 1 verbundene Gewindestange 4 in die Ausnehmung 3 des Waschtischs 2 eingelassen wird. Dabei liegt die Unterseite des Armaturenkörpers 1 auf der Waschtischoberseite 8 auf.

Anschließend wird das Gegenhalteelement 5 mit der Öffnung 7 von unten auf die Gewindestange 4 geradlinig aufgeschoben. Die Öffnung 7 des Gegenhalteelements 5 ist dabei größer als der Nenndurchmesser 12 des Außengewindes 13 der Gewindestange 4, wodurch ein einfaches Aufschieben des Gegenhalteelements 5 entlang der Gewindestange 4 möglich ist, bis es zu einem Anliegen des Gegenhalteelements 5 an der Waschtischunterseite 20 kommt.

Danach wird die Mutter 6 entlang der Gewindestange 4 aufgeschoben, bis es zu einem Anschlag der Mutter 6 gegen das Gegenhalteelement 5 kommt. Durch weiteres Aufschieben (leichtes Drücken) werden die Mantelabschnitte 16 durch die konischen Reduzierungen 17 der Mutter 6 und der Öffnung 7 nach innen ausgelenkt. Dabei kommt es zu einem Anliegen der Mantelabschnitt 16 auf die Gewindestange 4, wobei es zum Eingriff des Innengewindes 9 der Mutter 6 mit dem Außengewinde 13 der Gewindestange 4 kommt. In dieser Greifstellung (vergleiche Figur 1) kann die Mutter 6 über das Antriebsprofil 10 weiter angezogen werden bis es zu einer Endmontageposition (vergleiche Figur 5) der Mutter 6 kommt.

In der Endmontageposition liegt der Anlegevorsprung 18 mit einer flach ausgebildeten Oberseite an dem Gegenhalteelement 5 an. Zusätzlich sind durch die konische Reduzierung 17 die Mantelabschnitte 16 gleichmäßig in Bezug auf eine Mittelpunktsachse 14 der Mutter 6 ausgerichtet und der Gewindeeingriff ist durch die konische Reduzierung 17 und der Anordnung des Anlegevorsprungs 18 vorgegeben.

Bei einer Demontage der in den Figuren dargestellten Sanitärarmatur wird die Mutter 6 durch ein Lösen über das Antriebsprofil 10 zunächst gelöst und anschließend von der Gewindestange 4 abgezogen. Danach kann das Gegenhalteelement 5 ebenfalls von der Gewindestange 4 abgezogen werden und der mit der Gewindestange 4 verbundene Armaturenkörper 1 aus der Ausnehmung 3 des Waschtisches 2 genommen werden.

### Bezugszeichenliste

- 1: Armaturenkörper
- 2: Waschtisch
- 3: Ausnehmung
- 4: Gewindestange
- 5: Gegenhalteelement
- 6: Mutter
- 7: Öffnung
- 8: Waschtischoberseite
- 9: Innengewinde
- 10: Antriebsprofil
- 11: Kerndurchmesser
- 12: Nenndurchmesser
- 13: Außengewinde
- 14: Mittelpunktsachse
- 15: Längsausnehmung
- 16: Mantelabschnitt
- 17: konische Reduzierung
- 18: Anlegevorsprung
- 19: Zugstange
- 20: Waschtischunterseite

## Patentansprüche

1. Sanitärarmatur mit einer Befestigungsvorrichtung zum Fixieren eines Armaturenkörpers (1) auf einem Waschtisch (2), umfassend:
- den Armaturenkörper (1),
- eine durch eine Ausnehmung (3) im Waschtisch (2) führbare Gewindestange (4),
- ein Gegenhalteelement (5) und
- eine Mutter (6),
wobei das Gegenhalteelement (5) eine Öffnung (7) für die Gewindestange (4) aufweist, so dass das Gegenhalteelement (5) auf die mit dem auf einer Waschtischoberseite (8) anlegbaren Armaturenkörper (1) verbundene Gewindestange (4) von unten aufschiebbar ist, und wobei die Mutter (6) ein Innengewinde (9) und ein Antriebsprofil (10) aufweist, so dass der Armaturenkörper (1) durch Anziehen der Mutter (6) an dem Antriebsprofil (10) gegen das Gegenhalteelement (5) über ein Außengewinde (13) der Gewindestange (4) auf dem Waschtisch (2) fixierbar ist,
**dadurch gekennzeichnet, dass**
• die Mutter (6) entlang der Gewindestage (4) linear aufschiebbar ist, wobei die Mutter (6) wenigstens zwei in Umfangsrichtung versetzt zueinander angeordnete Längsausnehmungen (15) aufweist, so dass die Mutter (6) quer zu der Mittelpunktsachse (14) auslenkbare Mantelabschnitte (16) aufweist,
• wobei die Mantelabschnitte (16) auf der dem Gegenhalteelement (5) zugewandten Seite und/oder die Öffnung (7) des Gegenhalteelementes eine konische Reduzierung (17) aufweisen, so dass die Mantelabschnitte (16) bei dem linearen Aufschieben durch die konische Reduzierung (17) in Richtung der Mittelpunktsachse (14) auslenkbar sind, so dass die Mutter (6) in eine Greifstellung gelangt, in der das Innengewinde (9) und das Außengewinde (13) ineinandergreifen und aus der die Mutter (6) anziehbar ist.

2. Sanitärarmatur nach Anspruch 1, wobei die Mantelabschnitte (16) und die Öffnung (7) jeweils eine konische Reduzierung (17) aufweisen, wobei die äußere Gestalt der konischen Reduzierung (17) der Mantelabschnitte (16) komplementär zu der äußeren Gestalt der konischen Reduzierung (17) der Öffnung (7) ausgebildet ist.

3. Sanitärarmatur nach wenigstens einem der vorhergehenden Ansprüche, wobei die konische Reduzierung (17) linienförmig oder als Kurve ausgebildet ist.

4. Sanitärarmatur nach wenigstens einem der vorhergehenden Ansprüche, wobei die Mutter (6) an den Mantelabschnitten (16) einen radial vorstehenden Anlegevorsprung (18) aufweist.

5. Sanitärarmatur nach wenigstens einem der vorhergehenden Ansprüche, wobei das Innengewinde (9) ausschließlich im Bereich der Mantelabschnitte (16) ausgebildet ist.

6. Sanitärarmatur nach wenigstens einem der vorhergehenden Ansprüche, wobei zwischen der Mutter (6), dem Gegenhalteelement (5), dem Armaturenkörper (1) und/oder der Gewindestange (4) ein oder mehrere Dichtungsringe und/oder eine oder mehrere Unterlegscheiben verspannbar sind.

7. Sanitärarmatur nach wenigstens einem der vorhergehenden Ansprüche, wobei das Gegenhalteelement (5) nierenförmig ausgebildet ist.

8. Sanitärarmatur nach wenigstens einem der vorhergehenden Ansprüche, wobei ein Kerndurchmesser (11) des Innengewindes (9) der Mutter (6) größer ist als ein Nenndurchmesser (12) des Außengewindes (13) der Gewindestage (4).

9. Sanitärarmatur nach wenigstens einem der Ansprüche 1 bis 7, wobei ein Kerndurchmesser (11) des Innengewindes (9) der Mutter (6) gleich groß oder kleiner ist als ein Nenndurchmesser (12) des Außengewindes (13) der Gewindestange (4).

10. Sanitärarmatur nach wenigstens einem der vorhergehenden Ansprüche, wobei die Mutter (6) wenigstens drei in Umfangsrichtung versetzt zueinander angeordnete Längsausnehmungen (15) aufweist.
